(19) Europäisches Patentamt
European Patent Office
Office européen des brevets

(11) Veröffentlichungsnummer: **0 191 126**
**A1**

(12) **EUROPÄISCHE PATENTANMELDUNG**

(21) Anmeldenummer: **85101716.0**

(22) Anmeldetag: **15.02.85**

(51) Int. Cl.⁴: **C 09 B 33/06**, C 09 B 33/08, D 06 P 1/10

(43) Veröffentlichungstag der Anmeldung: **20.08.86 Patentblatt 86/34**

(84) Benannte Vertragsstaaten: **CH DE FR GB IT LI**

(71) Anmelder: **BASF Aktiengesellschaft, Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Hansen, Guenter, Dr., Alwin-Mittasch-Platz 8, D-6700 Ludwigshaven (DE)**
Erfinder: **Zeidler, Georg, Mutterstadter Strasse 7, D-6701 Dannstadt-Schauernheim (DE)**

(54) **Azoverbindungen.**

(57) Die Erfindung betrifft Verbindungen der allgemeinen Formel I

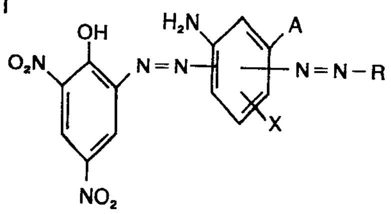

in der

R ein Rest der Formel

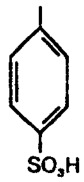, 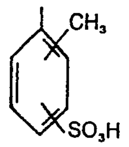, 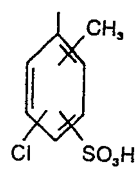, 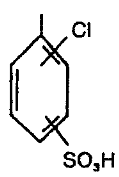,

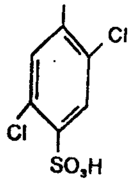, 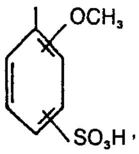, 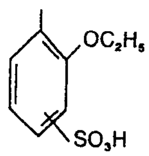, 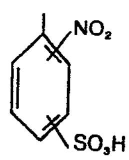,

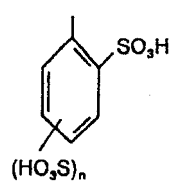, 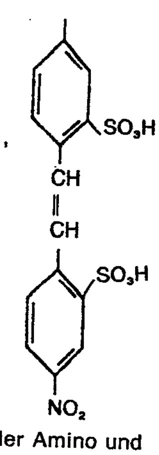 oder 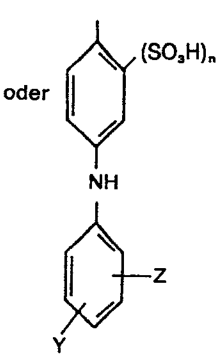,

A Hydroxy oder Amino und
X Wasserstoff oder Methyl sind, wobei
n 0 oder 1,
Y Wasserstoff, Chlor, Nitro oder Hydroxysulfonyl und
Z Wasserstoff oder Hydroxysulfonyl bedeuten sowie die Cu-, Cr-, Co-, Ni-, Mn- und Fe-Komplexe der Verbindungen der Formel I.

Die erfindungsgemäßen Verbindungen eignen sich insbesondere zum Färben von Leder.

EP 0 191 126 A1

## Azoverbindungen

Die Erfindung betrifft Verbindungen der allgemeinen Formel I

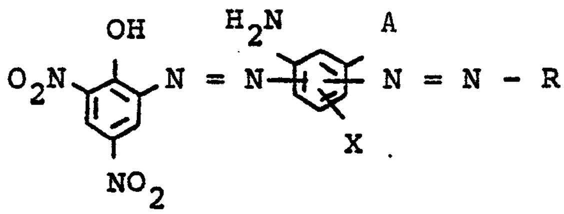 ,

in der

R ein Rest der Formel

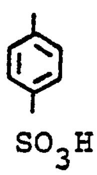 , 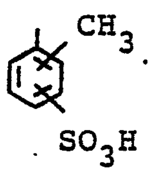 , 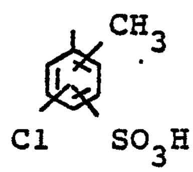 , 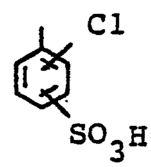 ,

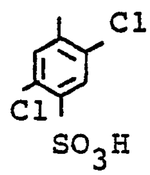 , 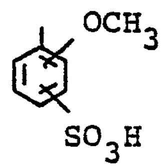 , 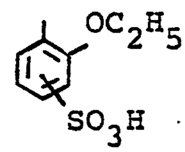 , 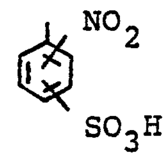 ,

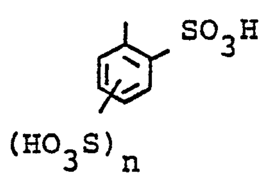 , 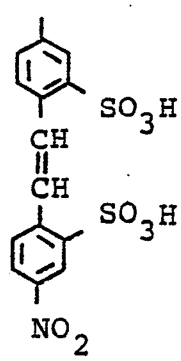 oder 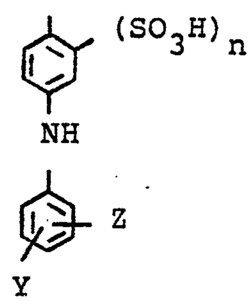 ,

A Hydroxy oder Amino und

X Wasserstoff oder Methyl sind, wobei

n 0 oder 1,

Y Wasserstoff, Chlor, Nitro oder Hydroxysulfonyl und

Z Wasserstoff oder Hydroxysulfonyl bedeuten sowie die Cu-, Cr-, Co-, Ni-, Mn- und Fe-Komplexe der Verbindungen der Formel I.

Zur Herstellung der Verbindungen der Formel I kann man z.B. die Diazoniumverbindung der Pikraminsäure mit einer Kupplungskomponente der Formel

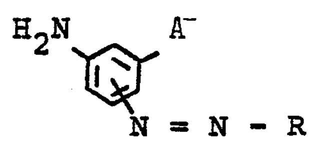

umsetzen.

Aus den so gewonnenen Farbstoffen können die Metallkomplexe in üblicher Weise hergestellt werden.

Repräsentative Einzelheiten der Umsetzungen können den Beispielen entnommen werden, in denen sich Angaben über Teile und Prozente, sofern nicht anders vermerkt, auf das Gewicht beziehen.

Bevorzugt für R ist insbesondere ein gegebenenfalls substituierter Phenylaminophenylrest.

Weitere bevorzugte Farbstoffe haben als R die Reste der Formeln

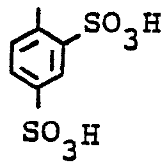 , 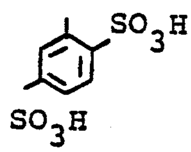 , 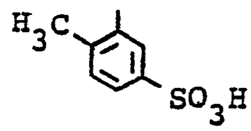 , 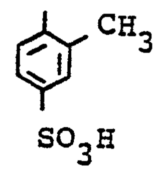 ,

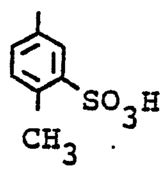 , 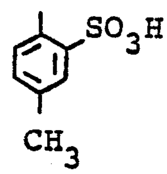 , 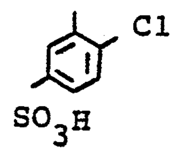 , 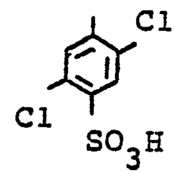 ,

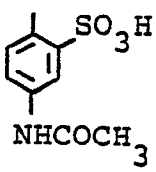 , 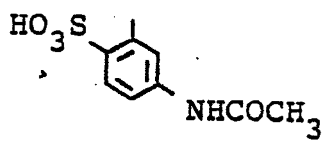 , 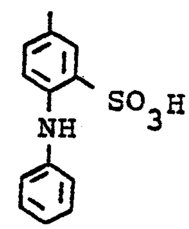 ,

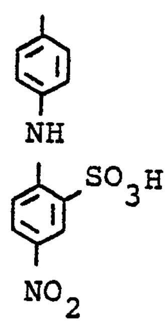 , 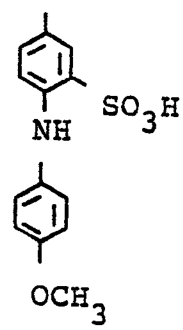 , 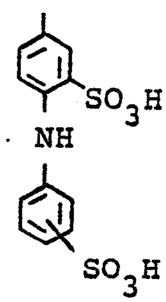 ,

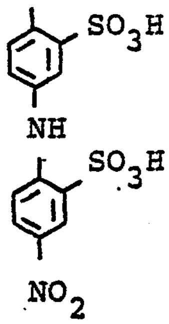 , 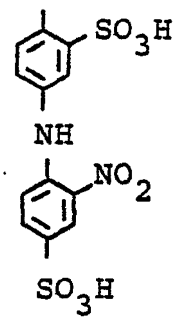 , 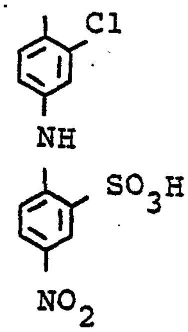 ,

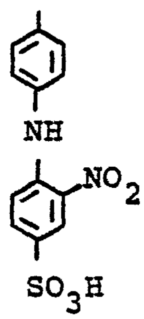 , 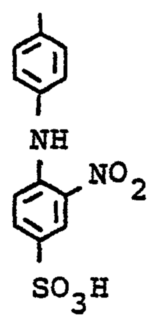 , 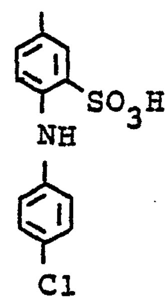 oder 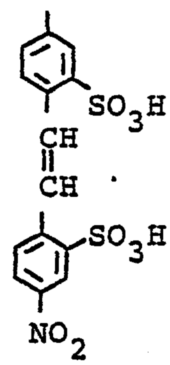 .

Bevorzugt sind die Farbstoffe in Form ihrer Cr- und insbesondere Eisenkomplexe.

Die Verbindungen der Formel I eignen sich insbesondere zum Färben von Ledern, wie vegetabilisch oder synthetisch nachgegerbtem Leder. Man erhält Färbungen mit guten Echtheiten.

Beispiel 1

17,2 Teile 1-Aminobenzol-4-sulfonsäure werden in der üblichen Weise diazotiert und in essigsaurer Lösung auf 11 Teile m-Phenylendiamin gekuppelt. Anschließend fügt man zu der Suspension bei pH 8 - 9 das Diazoniumsalz aus 19,9 Teilen 1-Amino-2-hydroxy-3,5-dinitro-benzol hinzu. Nach beendeter Kupplung wird das Reaktionsgemisch mit Essigsäure auf pH 5 eingestellt, mit 30 Teilen kristallisiertem Eisen-II-sulfat versetzt und bei pH 4 - 5 ungefähr 3 Stunden auf 90 - 95 °C erhitzt.

Nach erfolgter Metallisierung wird der Farbstoff durch Zugabe von Natriumchlorid abgeschieden, isoliert und getrocknet. Der Eisenkomplex der Verbindung der Formel

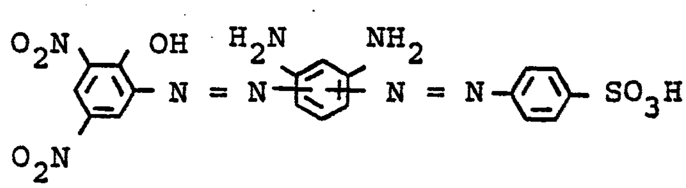

färbt Leder in licht- und naßechten rotstichig braunen Tönen.

Die in der folgenden Tabelle genannten Farbstoffe lassen sich entsprechend der obigen Vorschrift synthetisieren.

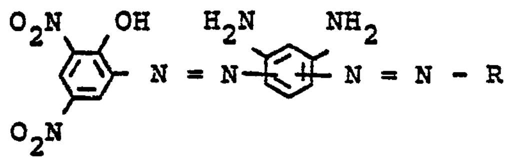

| Bsp. | R | Nuance d. Färbung auf Leder d. Metallkom. | | | | |
|---|---|---|---|---|---|---|
| | | Cu | Cr | Co | Ni | Fe |
| 2 | 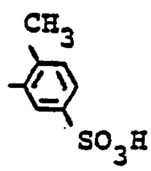 | rot braun | | | | gelb-braun |
| 3 | 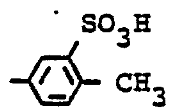 | | rot-braun | | | braun |
| 4 | 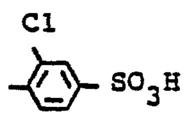 | rot-braun | | | | |
| 5 | 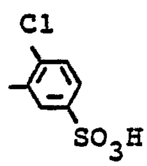 | | | violett-braun | | braun |
| 6 | 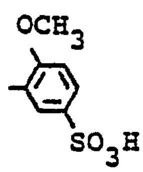 | | | | rot-braun | braun |
| 7 | 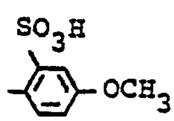 | | rot-braun | | | braun |
| 8 | 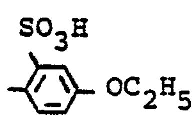 | rot-braun | rot-braun | | rot-braun | braun |

| Bsp. | R | Nuance d. Färbung auf Leder d. Metallkom. Cu | Cr | Co | Ni | Fe |
|---|---|---|---|---|---|---|
| 9 | 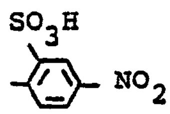 | | rot-braun | | | rot-braun |
| 10 | 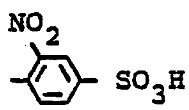 | rot-braun | | rot-braun | | |
| 11 | 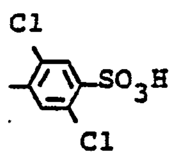 | | | | | rot-braun |
| 12 | 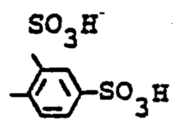 | rot-braun | | | | rot-braun |
| 13 | 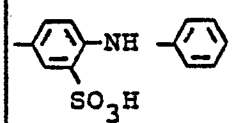 | | rot-braun | | | braun |
| 14 | 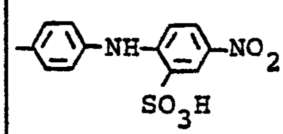 | rot-braun | | | rot-braun | braun |
| 15 | 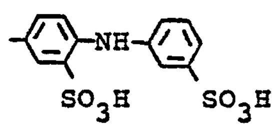 | rot-braun | | | | braun |

| Bsp. | R | Nuance d. Färbung auf Leder d. Metallkom. | | | | |
|---|---|---|---|---|---|---|
| | | Cu | Cr | Co | Ni | Fe |
| 16 | 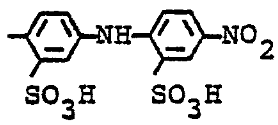 | rot-braun | | | rot-braun | braun |
| 17 | 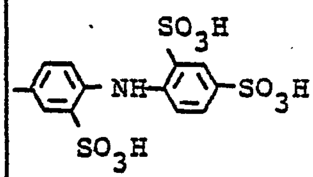 | rot-braun | | rot-braun | | braun |
| 18 | 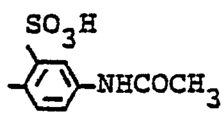 | | | | | braun |

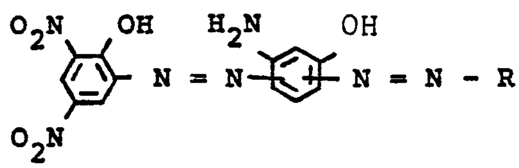

| Bsp. | R | Nuance d. Färbung auf Leder d. Metallkom. | | | | |
|---|---|---|---|---|---|---|
| | | Cu | Cr | Co | Ni | Fe |
| 19 | 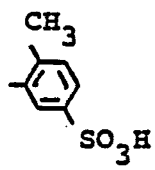 | rot braun | | | | gelb-braun |
| 20 | 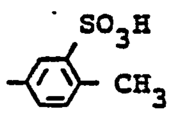 | | rot-braun | | | braun |
| 21 | 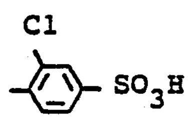 | rot-braun | | | | |
| 22 | 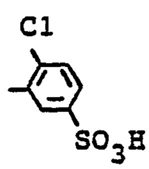 | | | violett-braun | | braun |
| 23 | 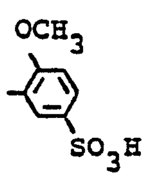 | | | | rot-braun | braun |
| 24 | 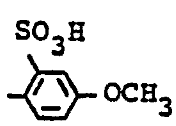 | | rot-braun | | | braun |
| 25 | 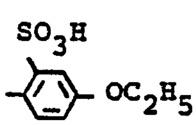 | rot-braun | rot-braun | | rot-braun | braun |

| Bsp. | R | Nuance d. Färbung auf Leder d. Metallkom. | | | | |
|---|---|---|---|---|---|---|
| | | Cu | Cr | Co | Ni | Fe |
| 26 | 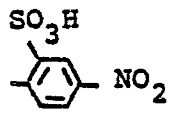 | | rot-braun | | | rot-braun |
| 27 | 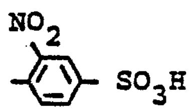 | rot-braun | | rot-braun | | |
| 28 | 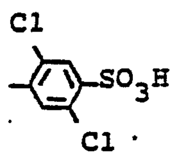 | | | | | rot-braun |
| 29 | 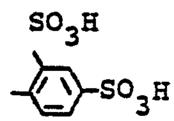 | rot-braun | | | | rot-braun |
| 30 | 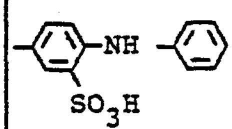 | | rot-braun | | | braun |
| 31 | 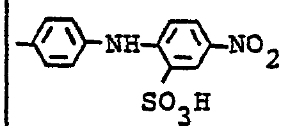 | rot-braun | | | rot-braun | braun |
| 32 | 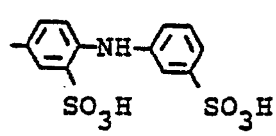 | rot-braun | | | | braun |

| Bsp. | R | Nuance d. Färbung auf Leder d. Metallkom. | | | | |
|---|---|---|---|---|---|---|
| | | Cu | Cr | Co | Ni | Fe |
| 33 | 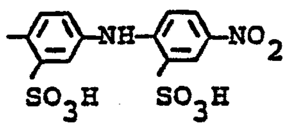 | rot-braun | | | rot-braun | braun |
| 34 | 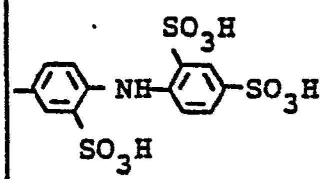 | rot-braun | | rot-braun | | braun |
| 35 | 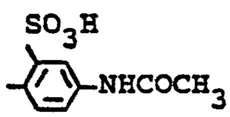 | | | | | braun |

Patentansprüche

1. Verbindungen der allgemeinen Formel I

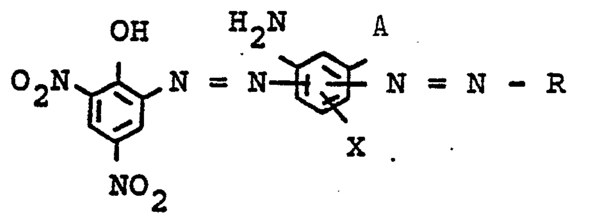 ,

in der

R ein Rest der Formel

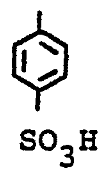 , 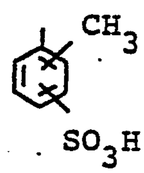 , 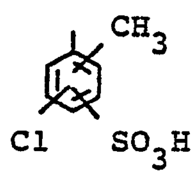 , 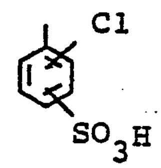 ,

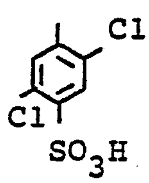 , 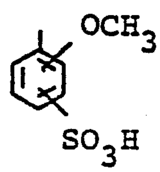 , 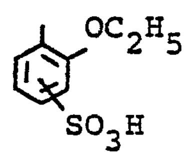 , 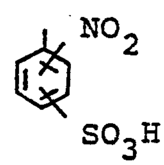 ,

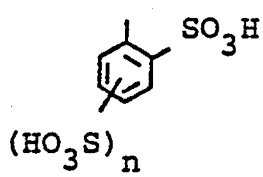 , 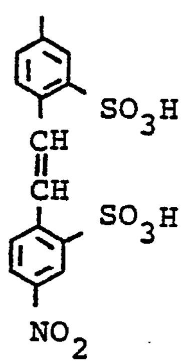 oder 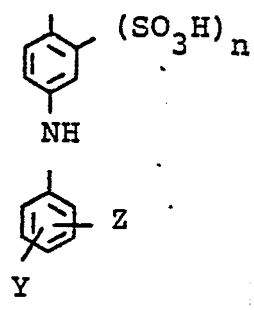 ,

A Hydroxy oder Amino und

X Wasserstoff oder Methyl sind, wobei

n 0 oder 1,

Y Wasserstoff, Chlor, Nitro oder Hydroxysulfonyl und

Z Wasserstoff oder Hydroxysulfonyl bedeuten sowie die Cu-, Cr-, Co-, Ni-, Mn- und Fe-Komplexe der Verbindungen der Formel I.

2. Die Eisen- oder Chromkomplexe der Verbindungen gemäß Anspruch 1.

3. Die Eisen- oder Chromkomplexe der Verbindungen gemäß Anspruch 1, wobei R ein gegebenenfalls subsituierter Phenylaminophenylrest ist.

4. Verbindungen gemäß Anspruch 3 mit A = OH.

5. Verwendung der Verbindungen gemäß Anspruch 1 zum Färben von Leder.

Europäisches Patentamt

# EUROPÄISCHER RECHERCHENBERICHT

0191126

Nummer der Anmeldung

EP 85 10 1716

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-1 308 768 (VEB FARBENFABRIK WOLFEN) * Insgesamt * | 1,2,5 | C 09 B 33/06<br>C 09 B 33/08<br>D 06 P 1/10 |
| A | GB-B- 440 150 (SOCIETY OF CHEMICAL INDUSTRY IN BASLE) * Beispiele 10,13 * | 1,2,5 | |
| A | EP-A-0 091 020 (BASF) * Ansprüche 1-3 * | 1,2,4,5 | |
| A | US-A-2 200 445 (FELLMER) * Beispiel 8 * | 1,2,5 | |
| A | FR-A-2 267 349 (SANDOZ) * Anspruch 18, Formel VII; Ansprüche 19,21 * | 1-3,5 | RECHERCHIERTE SACHGEBIETE (Int. Cl.4) |
| E | DE-A-3 428 836 (BASF) * Ansprüche 1-4 * | 1-3,5 | C 09 B |

Der vorliegende Recherchenbericht wurde für alle Patentansprüche erstellt.

| Recherchenort | Abschlußdatum der Recherche | Prüfer |
|---|---|---|
| DEN HAAG | 12-11-1985 | GINESTET M.E.J. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82